# NEUE EUROPÄISCHE PATENTSCHRIFT

(11) **EP 0 603 603 B2**
(45) Veröffentlichungstag und Bekanntmachung des Hinweises auf die Entscheidung über den Einspruch: **16.10.2002**
(45) Hinweis auf die Patenterteilung: 04.08.1999
(21) Anmeldenummer: 93119419.5
(22) Anmeldetag: 02.12.1993
(51) Int. Cl.: C04B 28/04

(54) **Schnellerhärtendes, hydraulisches Bindemittel**
Rapid-setting hydraulic binder
Liant hydraulique à prise rapide

(30) Priorität: 14.12.1992 DE 4242107
(43) Veröffentlichungstag der Anmeldung: 29.06.1994
(73) Patentinhaber: Heidelberger Zement AG, D-69120 Heidelberg (DE)
(72) Erfinder: Unsin, Joachim, D-69115 Heidelberg (DE); Braunbach, Hans Peter, D-67688 Rodenbach (DE); Tax, Manfred, D-69207 Sandhausen (DE)
(74) Vertreter: Schmid, Rudolf, Dipl.-Ing., Patentanwalt

(56) Entgegenhaltungen:
- EP-A- 0 213 390
- EP-A- 0 402 319
- CH-A- 263 901
- CHEMICAL ABSTRACTS, vol. 111, no. 24, 11. Dezember 1989, Columbus, Ohio, US; abstract no. 218553q, & HU-A-48 558 (SZILIKATIPARI KOZPONTI KUTATO ES TERVEZO INTEZET) 28. Juni 1989
- CHEMICAL ABSTRACTS, vol. 112, no. 20, 14. Mai 1990, Columbus, Ohio, US; abstract no. 184837p, & CS-A-260 577 (M.NEJEZCHLEB ET AL) 15. Juni 1989
- DATABASE WPI Week 8212, Derwent Publications Ltd., London, GB; AN 82-23097E & JP-A-57 027 953 (HAZAMA-GUMI KK) 15. Februar 1982
- CHEMICAL ABSTRACTS, vol. 114, no. 26, 1. Juli 1991, Columbus, Ohio, US; abstract no. 252831a, & JP-A-02 302 351 (MITSUBISHI MINING AND CEMENT CO.) 14. Dezember 1990
- DATABASE WPI Week 8950, Derwent Publications Ltd., London, GB; AN 89-367550 & JP-A-01 275 456 (UBE INDUSTRIES KK) 6. November 1989
- CHEMICAL ABSTRACTS, vol. 114, no. 16, 22. April 1991, Columbus, Ohio, US; abstract no. 149058e, & SE-B-463 673 (CEMENTA AB) 07 Januar 1991
- H.Reul, Handbuch der Bauchemie
- M.Yudenfreund et al., Cement and Concrete Research 2, 313-330 (1972)
- M.Yudenfreund et al., Cement and Concrete Research 2, 331-348 (1972)
- S.Brunauer et al., Cement and Concrete Research 3, 129-147 (1973)
- S.Brunauer et al., Cement and Concrete Research 3, 279-293 (1973)
- H.B.Roy et al., Geotechnical Special Publ.Nr.30, Bd.1, 512-525
- J.Clarke ASCE Atlanta, Georgia
- W.H.Baker, Proceedings of the Conference on Grounting in Geotechnical Engineering
- H.B.Roy, Geotechnical Special, Publ.Nr. 30, Bd.1, 626-638

## Beschreibung

Die Erfindung betrifft ein schnellerhärtendes Bindemittel zur Verwendung mit Wasser und gegebenenfalls Zuschlägen und Zusätzen.

Der Begriff "Portlandzement" soll diejenigen hydraulischen Bindemittel umfassen, die in der ASTM Norm C150 beschrieben sind, wobei die Typen I, II oder III speziell für den Zweck der Erfindung bevorzugt sind, obwohl auch andere Formen von Portlandzement geeignet sind.

Die Begriffe "Zusatzstoffe" und "Zuschläge" sollen Stoffe umfassen, im Sinne der Begriffsbestimmung nach DIN 1045 und DIN 4226.

Zur Entwicklung sohnellerhärtender, hydraulischer Bindemittel mit hohen Früh- und Endfestigkeiten sind in der Vergangenheit viele unterschiedliche Wege beschritten worden und heute zahlreiche Veriahren und Zusammensetzungen bekannt.
Um das auf besonderen Rohmischungen unter Einsatz spezieller Rohstoffe basierende Erbrennen von speziellen Schnellzementklinkern und damit auch die Abhängigkeiten von bestimmten Produktionsstandorten zu vermeiden, wurden in den letzten Jahrzehnten intensive Forschungs- und Entwicklungsarbeiten auf dem Gebiet der Mischzemente betrieben.
Von verschiedenen Forschern wurden dabei zunehmend leistungsfähigere Systeme erarbeitet.
An erster Stelle sind hier die Bindemittel zu nennen, deren Basis eine Mischung aus Portlandzement und Tonerdezement bildet.
Diese, zu Raschbindern mäßiger Früh- und Endfestigkelt führenden Gemische aus handelsüblichem oder modifiziertem Portlandzement mit Calciumaluminat bzw. Tonerdezement, wurden dabei durch Zugabe einer Reihe fein abgestimmter Wirkstoffe zunehmend zu Schnellzementen mit besser einstellbarem Erstarrungsbeginn, rasch einsetzender Frühfestigkeitsentwicklung und guten Endfestigkeiten weiterentwickelt.
Zum Stand der Technik ist hierzu folgendes auszuführen:
Aus der EP-PS 0 228 595 ist eine schnellerhärtende Bindemittelmischung, enthaltend Portlandzementklinker, reaktive Calciumaluminate und/oder Tonerdezement, reaktives Calciumsulfat, einen organischen Abbindeverzögerer sowie Alkalicarbonat, bekannt.

Bei dieser Bindemittelmischung ergibt sich eine stelle Erstarrungscharakteristik nach Beendigung der Topfzeit mit hohen Früh- und Endfestigkeiten.

Der Nachteil dieses Bindemittels liegt in den notwendigerweise strengen und einengenden Anforderungen bei der Auswahl der Ausgangsstoffe. So muß als Hauptkomponente nicht etwa handelsüblicher Portlandzement, sondern ohne Gipszusatz gemahlener Portlandzement-Klinker verwendet werden, dem eine geringe Menge an Calciumsulfat zugemischt ist.

Ferner wird durch die EP-PS 0 213 390 eine Mortelmischung beschrieben, die neben üblichen Zuschlägen und Zusätzen reaktive Calciumsilicate, reaktive Aluminate, Calciumhydroxid, Calciumsulfathydrat, Calciumsulfatanhydrit II und organischen Abbindeverzögerer enthält, wobei eine Erhöhung der Menge an reaktiven Aluminaten eine Erhöhung der Früh- und Endfestigkeiten bewirkt, eine Maßnahme, die zu einer erheblichen Erhöhung der Materialkosten führt.

Im Hinblick auf den Gehalt an reaktiven Calciumaluminaten bzw. Tonerdezement in schnellerhärtenden Bindemitteln des oben beschriebenen Typs, zeigen die oben angeführten Literaturstellen, daß die Fachwelt Anteile von mindestens 5 Masse-%, üblicherweise erheblich höhere Anteile, für unabdingbar hält.

Es ist nun Aufgabe der Erfindung ein schnellerhärtendes hydraulisches und kostengünstiges Bindemittel, da ohne Zusatz von reaktiven Aluminaten bereitzustellen, das sich durch hohe Früh- und Endfestigkeiten auszeichnet bei gleichzeitig guten Verarbeitungszeiten.

Diese Aufgabe wird durch das Bindemittel mit den Merkmalen des Anspruchs 1 gelöst. Weitere Ausführungsformen sind den Unteransprüchen zu entnehmen.

Über ein schnellerhärtendes, hydraulisches Bindemittelsystem, bei dem Alkalicarbonat einerseits und Alkali- oder Erdalkaliligninsulfonat andererseits eingesetzt werden, ist vielfach in der Fachliteratur berichtet worden. Es sei verwiesen auf die umfangreichen und grundlegenden Untersuchungen von Stephen Brunauer, Jan Skalny, Ivan Odler und Marvin Yudenfreund, veröffentlicht in CEMENT and CONCRETE RESEARCH, Vol. 2 1972 und Vol. 3 1973.

Diese Untersuchungen, ebenso wie die US-Patentschrift Nr. 3 689 294 zeigen die Übereinstimmende Meinung der Autoren, daß ein solches System nur dann ausreichende Verarbeitungseigenschaften aufweist, wenn kein Gips bzw. Calciumsulfat in der Mischung enthalten ist, d. h., wenn das System besteht aus:
Portlandzement-Klinker
Alkali- oder Erdalkaliligninsulfonat und
Alkalicarbonat.

Im US-Patent Nr. 3 960 582 wird anstelle des Alkalicarbonats ein Alkalihydrogencarbonat eingesetzt, mit dem Ziel, eine längere Verarbeitungszeit zu erreichen.
In einem solchen gipsfreien System ergeben sich nach dem Anmachen mit Wasser eine Reihe recht komplexer und nicht restlos geklärter Reaktionen der Zusätze mit Bestandteilen des Klinkers und auch untereinander. Neben der Bildung von Carboaluminaten führt die Anwesenheit von Alkalicarbonat unter anderem auch zur Bildung von Alkalihydroxid und demzufolge zu einem Anstieg des pH-Wertes im Anmachwasser, was wiederum Auswirkungen auf die Konzentration der Ca⁺⁺-lonen darin und dadurch auf die Löslichkeit und somit Wirksamkeit von z. B. Calciumligninsulfonat sowohl als verflüssigender als auch als verzögernder Substanz im Hinblick auf die Hydratation der Calciumsilicate besitzt.

EP 0402319 offenbart ein Bindemittel aus Portlandzement mit Erstarrungsverzögerern, Beschleunigern und zeitverzögert freigesetztem Dispergiermittel mit verbesserter Fließfähigkeit vor einem frühen Erstarrungsbeginn.

Neben den beiden bereits genannten Eigenschaften der Ligninsulfonate, verflüssigend und erhärtungsverzögernd zu wirken, besitzt es auch die Fähigkeit, im Zusammenwirken mit Alkalicarbonat selbst aktiv die Entwicklung der Festigkeiten zu begünstigen. Dazu bedarf es allerdings einer gewissen Mindestmenge an zugesetztem Ligninsulfonat. Eigene Untersuchungen haben nun gezeigt, daß bei Zusatz von Ligninsulfonat in dieser erforderlichen und im gipsfreien System wirksamen Höhe, die Hydratation der Calciumsilicate in handelsüblichen, Calciumsulfat-haltigen, Portlandzementen üblicher Feinheit und mit üblichem Kornaufbau dramatisch verzögert wird, der Portlandzement sein Frühfestigkeitspotential verliert und somit auf diese Weise keine Schnellzemente mit sehr hohen Frühfestigkeiten erhalten werden können. Überraschender Weise wurde ferner gefunden, daß die Verwendung eines Sulfatträgers in Form des Calciumsulfat-Dihydrates, Calciumsulfat-Halbhydrates und/oder Calciumsulfat-Anhydrites in dem erfindungsgemäßen System sich nicht nachteilig auf die Verarbeitungseigenschaften auswirkt. Und zwar ist dies dann der Fall, wenn ein Teil des Portlandzementes durch die entsprechende Menge eines Feinstzementes ersetzt wird, auch wenn dieser die genannten Sulfatträger in einer Menge entsprechend den Vorschriften DIN 1164, oder sogar darüber hinausgehende, auf die Reaktivität des Zementklinkers optimierte, Anteile enthält.

Ein solcher Feinstzement im Sinne der Erfindung ist primär dadurch gekennzeichnet, daß er eine spezifische Oberfläche von mindestens 9.000 cm²/g nach Blaine aufweist und einen Größtkornanteil von weniger als 5 Masse-% > 16 mikron aufweist.
Durch die hohe spezifische Oberfläche des Feinstzementes und seinen äußerst geringen Anteil an Grobpartikeln, sein damit verbundenes Adsorptionsvermögen und seine entsprechend hohe Reaktivität, d. h. insbesondere seinen hohen Reaktionsumsatz unmittelbar nach der Wasserzugabe, kann der erforderliche, relativ hohe Anteil eines Ligninsulfonates als Wirkstoff im Portlandzement gemeinsam mit Alkalicarbonat eingesetzt werden, ohne daß die üblicherweise dadurch hervorgerufene, sehr starke Verzögerung der Hydratation der Calciumsilicate in Kauf genommen werden muß.
Die verflüssigende Wirkung des Ligninsulfonates, die im Zusammenwirken mit dem Alkalicarbonat besonders ausgeprägt ist, gleicht den durch den Zusatz des Feinstzementes zunächst erhöhten Wasseranspruch wieder aus.
Durch die Verwendung eines Sulfatträgers im Feinstzement, dessen Zusammensetzung und Menge optimal auf die Reaktivität des Zementklinkers abgestimmt ist, werden bei der Anfangsreaktion mit dem Anmachwasser zwar entsprechend der höheren Feinheit des Zementes, größere Mengen Tricalciumaluminat (C₃A) zu Ettringit (C₃A • 3CaSO₄ • 32H₂O) umgesetzt; dieses bildet sich aber zunächst in Form kurzstengeliger Kristalle auf den Zementpartikeln aus, wodurch die Verarbeitungseigenschaften des Zementes für eine ausreichend lange Zeitspanne praktisch unbeeinträchtigt bleiben.
Darüber hinaus wird durch die auf die Reaktivität des Feinstzementes abgestimmte Art und Menge des Sulfatträgers die Bildung von Monosulfatphasen bzw. Aluminathydraten vermieden, welche kartenhausförmig zwischen den Zementpartikeln aufwachsen und dadurch die Verarbeitungseigenschaften des Zementleims, Mörtels oder Betons drastisch verschlechtern.
Durch Einsatz geringer Mengen bekannter und üblicher Verzögerer, wie z. B. Weinsäure, Citronensäure und deren wasserlösliche Salze, z. B. Alkalisalze, kann die Ruhepause des Bindemittels unmittelbar nach dem Anmachen mit Wasser noch optimiert werden.
Durch Zugabe geringer Mengen von Erstarrüngsbeschleunigern, wie z. B. Natriumaluminat, kann die Ruhepause nach dem Anmachen mit Wasser verkürzt werden.
Moderne Portlandzemente werden in aller Regel unter Einsatz von Calciumsulfaten hergestellt, die nach Art und Menge auf die Reaktivität der jeweils eingesetzten Klinker optimiert sind. Dadurch sind sie für den Einsatz im Sinne der Erfindung geeignet.

Die Erfindung schafft also auch ein Schnellzementsystem, das durch die Variation insbesondere von Portlandzementen mittlerer und hoher spezifischer Feinheit in einer Abmischung mit Alkalicarbonat und Ligninsulfonat sowohl die Steuerung der Erstarrungszeit, als auch die Einstellung der Erhärungs-Charakteristik in einem weiten Bereich ermöglicht.
Höhere Anteile an Feinstzement führen dabei in der Regel sowohl zu höheren Frühfestigkeiten, als auch zu höheren Endfestigkeiten des Mörtels oder Betons.

## Patentansprüche

1. Schnellerhärtendes hydraulisches Bindemittel aus Portlandzement sowie an sich bekannten Zusatzstoffen, **gekennzeichnet durch** einen Gehalt von
5 - 95 Massen-% eines Bindemittels der Zusammensetzung
a) 98,00 bis 99,39 Massen-% Portlandzement einer Feinheit von 2 500 bis 6 000 cm²/g nach Blaine,
b) 0,5 bis 1,5 Massen-% Alkalicarbonat,
c) 0,1 bis 0,4 Massen-% organischer die Hydratation der Calciumsilicate hemmender Verzögerer,
d) 0,01 bis 0,1 Massen-% organischer, die Hydratation der Calciumaluminatsulfate hemmender Verzögerer und
5 - 95 Massen-% eines Bindemittels der Zusammensetzung
a) 94,70 bis 99,39 Massen-% Portlandzement einer Feinheit von 9 000 bis 20 000 cm²/g nach Blaine,
b) 0,5 bis 2,0 Massen-% Alkalicarbonat,
c) 0,1 bis 3,0 Massen-% organischer die Hydratation der Calciumsilicate hemmender Verzögerer,
d) 0,01 bis 3,0 Massen-% organischer, die Hydratation der Calciumaluminatsulfate hemmender Verzögerer.

2. Bindemittel nach Anspruch 1,
**dadurch gekennzeichnet,**
**daß** die Komponente c) ein Alkali- oder Erdalkalisalz der Ligninsulfonsäure, wie Calciumligninsulfonat, ist.

3. Bindemittel nach Anspruch 1,
**dadurch gekennzeichnet,**
**daß** die Komponente d) eine Oxycarbonsäure wie Wein- oder Citronensäure oder deren leicht wasserlösliche Salze, wie Alkalisalze, ist.

4. Bindemittel nach Anspruch 1,
**dadurch gekennzeichnet,**
**daß** der Portlandzement ein Portlandzement mit hohem Sulfatwiderstand nach DIN 1164 Pkt.4.6.1. ist.

5. Bindemittel nach Anspruch 1,
**dadurch gekennzeichnet,**
**daß** der eingesetzte Portlandzement hydrophobiert ist.

6. Bindemittel nach Anspruch 1,
**dadurch gekennzeichnet,**
**daß** der Portlandzement Kalkstein, Flugasche, Hüttensand und/oder Traß enthält.

7. Verwendung des Bindemittels nach Anspruch 1 bis 6 in einem Mörtel oder Beton.

## Claims

1. A fast hardening hydraulic bonding agent, consisting of Portland cement as well as basically known admixtures, **characterized by** a content of
5 - 95 mass-% of a bonding agent with a content of
a) 98.00 to 99.39 mass-% of Portland cement, whose fineness according to Blaine lies between 2,500 and 6,000 cm²/g,
b) 0.1 to 1.5 mass-% of alcali carbonate,
c) 0.1 to 0.4 mass-% of an organic retarding agent slowing down the calcium silicates' hydration,
d) 0.01 to 0.1 mass-% of an organic retarding agent which slows down the calcium aluminate sulfate's hydration and
5 to 95 mass-% of a bonding agent with a content of
a) 94.70 to 99.39 mass-% of Portland cement, whose fineness according to Blaine lies between 9,000 and 20,000 cm²/g,
b) 0.5 to 2.0 mass-% of alcali carbonate,
c) 0.1 to 3.0 mass-% of an organic retarding agent slowing down the calcium silicates' hydration,
d) 0.01 to 3.0 mass-% of an organic retarding agent which slows down the calcium aluminate sulfate's hydration.

2. A bonding agent according to claim 1, **characterized in that** the component c) consists of alkali salt or earth alkali salt from lignin sulfonate acid, especially of calcium lignin sulfonate.

3. A bonding agent according to claim 1, **characterized in that** as component d), there are oxycarbonate acids present, such as wine acid or citric acid and/or their easily water-soluble salts, especially alkali salts.

4. A bonding agent according to claim 1, **characterized in that** the Portland cement is a Portland cement with a high sulfate resistance according to standard DIN 1164, point 4.6.1.

5. A bonding agent according to claim 1, **characterized in that** the used Portland cement has been hydrophobed.

6. A bonding agent according to claim 1, **characterized in that** the Portland cement contains limestone, flue ash, sand and/or trass.

7. Use of the bonding agent according to claims 1 - 6 in a mortar or concrete.

## Revendications

1. Liant hydraulique à prise rapide constitué par du ciment portland ainsi que des additifs connus, **caractérisé par** une teneur de 5 à 95 masse-% d'un liant de composition
a) 98,00 à 99,39 masse-% de ciment portland d'une finesse de 2.500 - 6.000 cm²/g selon Blaine
b) 0,5 à 1,5 masse-% de carbonate alcalin
c) 0,1 à 0,4 masse-% d'un retardeur organique empêchant l'hydratation des silicates de calcium
d) 0,01 à 0,1 masse-% d'un retardeur organique empêchant la formation des sulfoaluminates de calcium
et de
5 - 95 masse-% d'un liant de composition
a) 94,70 à 99,39 masse-% de ciment portland d'une finesse de 9.000 - 20.000 cm²/g selon Blaine
b) 0,5 à 2,0 masse-% de carbonate alcalin
c) 0,1 à 3,0 masse-% d'un retardeur organique empêchant l'hydratation des silicates de calcium
d) 0,01 à 3,0 masse-% d'un retardeur organique empêchant la formation des sulfoaluminates de calcium.

2. Liant selon la revendication 1,
**caractérisé en ce que**
le composant c) est un sel alcalin ou un sel de base alcalino-terreuse de l'acide sulfonique, tel que le lignosulfonate de calcium.

3. Liant selon la revendication 1,
**caractérisé en ce que**
le composant d) est un oxyacide carbonique tel que l'acide tartrique ou l'acide citrique ou les sels facilement solubles dans l'eau de ceux-ci, comme les sels alcalins.

4. Liant selon la revendication 1
**caractérisé en ce que**
le ciment portland est un ciment portland à forte résistance à l'aggressivité des sulfates, selon DIN 1164, alinéa 4.6.1.

5. Liant selon la revendication 1
**caractérisé en ce que**
le ciment portland utilisé a été rendu hydrophobe.

6. Liant selon la revendication 1
**caractérisé en ce que**
le ciment portland contient du calcaire, des cendres volantes, du sable de laitier et/ou du trass.

7. Utilisation du liant selon les revendications 1 à 6 dans un mortier ou un béton.
